# EUROPÄISCHE PATENTANMELDUNG

(11) **EP 4 282 527 A1**
(43) Veröffentlichungstag der Anmeldung: **29.11.2023**
(21) Anmeldenummer: 22175273.6
(22) Anmeldetag: 25.05.2022
(51) Int. Cl.: B01J 23/46, B01J 23/52, B01J 23/44, B01J 23/755, B01J 23/652, B01J 35/00, B01J 35/04, B01J 35/06, C01B 21/26

(54) **KATALYSATORSYSTEM FÜR EINEN STRÖMUNGSREAKTOR SOWIE VERFAHREN ZUR KATALYTISCHEN OXIDATION VON AMMONIAK**

(71) Anmelder: Heraeus Deutschland GmbH & Co. KG, 63450 Hanau (DE)
(72) Erfinder: HESSE, Jens, 63450 Hanau (DE); HIRSCHEL, Pascal, 63450 Hanau (DE); MAIER, Dirk, 63450 Hanau (DE); JANTSCH, Uwe, 63450 Hanau (DE)
(74) Vertreter: Heraeus IP

(57) **Zusammenfassung**

Die vorliegende Erfindung betrifft ein Katalysatorsystem für Strömungsreaktoren, das durch die Abfolge der eingesetzten edelmetallhaltigen Legierungen der das Katalysatorsystem bildenden Katalysatornetze charakterisiert wird. Durch den Einsatz einer ternären Platinlegierung für eine zweite und einer Palladiumlegierung für eine dritte Katalysatornetzgruppe kann der Platin- und Rhodium-Gehalt des Katalysatorsystems bei einer hohen Effizienz insgesamt relativ niedrig gehalten werden. Außerdem betrifft die Erfindung ein Verfahren zur katalytischen Verbrennung von Ammoniak, bei dem ein mindestens Ammoniak enthaltendes Frischgas durch ein Katalysatorsystem geleitet wird.

## Beschreibung

Die vorliegende Erfindung betrifft ein Katalysatorsystem für Strömungsreaktoren, das durch die Abfolge der eingesetzten edelmetallhaltigen Legierungen der das Katalysatorsystem bildenden Katalysatornetze charakterisiert wird. Außerdem betrifft die Erfindung ein Verfahren zur katalytischen Verbrennung von Ammoniak, bei dem ein mindestens Ammoniak enthaltendes Frischgas durch ein Katalysatorsystem geleitet wird.

Katalysatorsysteme im Sinne der vorliegenden Erfindung werden insbesondere für Gasreaktionen verwendet. Sie werden beispielsweise bei der Herstellung von Blausäure nach dem Andrussow-Verfahren oder bei der Herstellung von Salpetersäure nach dem Ostwald-Verfahren eingesetzt. Um für diese Reaktionen eine große katalytisch-aktive Oberfläche bereitzustellen, weisen solche Katalysatoren in der Regel eine räumliche, gasdurchlässige Struktur auf. Auch Auffangsysteme zur Rückgewinnung von verdampften katalytisch aktiven Bestandteilen basieren häufig auf solchen netzförmigen Strukturen. Es werden zweckmäßigerweise meist mehrere Netze hintereinander angeordnet und zu einem Katalysatorsystem zusammengefasst. Die Katalysatornetze bestehen meist aus ein- oder mehrlagigen Gestricken, Gewirken oder Geweben. Die einzelnen Netze bestehen dabei aus feinen Edelmetalldrähten, die überwiegend Platin (Pt), Palladium (Pd), Rhodium (Rh) oder Legierungen dieser Metalle enthalten. Vor allem Auffang-Netze können auch weitere Bestandteile wie beispielsweise Nickel enthalten.

Je nach Bauart kommen in Strömungsreaktoren Systeme mit 2 bis 50 Katalysator-Netzen mit einem Durchmesser von bis zu 6 m zum Einsatz. Der Edelmetalleinsatz stellt eine hohe, gebundene Investition dar und wird so gering wie möglich gehalten. Andererseits hängt die "katalytische Effizienz", die eine wichtige Kenngröße und ein Maß für dauerhaft hohe Umsätze der Edukte und gute Ausbeute ist, vom Edelmetall-Anteil ab. Aufgrund von steigenden Edelmetallpreisen und der dadurch steigenden Kapitalbindung in den Katalysatorsystemen wird angestrebt, den Edelmetallgehalt der Katalysatorsysteme bei gleichbleibender Effizienz zu minimieren.

Während des Betriebs verlieren die Katalysatornetze infolge von Oxidation und Sublimation kontinuierlich Edelmetall, so dass sie von Zeit zu Zeit (Standzeit, Gebrauchsdauer) mit gewissem Aufwand ausgetauscht werden müssen. Als geeigneter Kompromiss hinsichtlich Gebrauchsdauer, katalytischer Effizienz und Edelmetalleinsatz hat sich die PtRh5-Legierung erwiesen, die sich als industrieller Standard für Edelmetallkatalysatoren für den Einsatz in Mitteldruckanlagen durchgesetzt hat.

Die EP 3680015 A1 offenbart Katalysatorsysteme aus mindestens zwei Netzlagen, bei dem bevorzugt binäre PtRh-Legierungen zum Einsatz kommen, deren Rhodiumgehalt in Strömungsrichtung abnimmt. Der Platin- und der Rhodium-Gehalt der Katalysatorsysteme ist aufgrund der Verwendung von binären Platin-Rhodium-Legierungen insgesamt hoch.

Um den Edelmetalleinsatz unter Beibehaltung der katalytischen Effizienz zu verringern, wird in der EP 1284927 A1 ein Katalysatorsysteme aus mindestens zwei Netzlagen vorgeschlagen, bei dem das in Strömungsrichtung gesehen erste Netz aus einer Platinrhodiumlegierung und das zweite Netz aus einer Palladiumrhodiumlegierung gebildet wird.

In der CN 101554585 A wird ein Katalysatorsystem umfassend mindestens drei Netzlagen aus Legierungen mit unterschiedlichen Zusammensetzungen beschrieben. Die erste und zweite Netzlage werden aus einer Platinlegierung gebildet, wobei die Platinlegierung der mittleren Netzlage einen niedrigeren Platinanteil enthält.

Aufgabe der vorliegenden Erfindung war die Bereitstellung eines Katalysatorsystems für einen Strömungsreaktor, bei dem der Einsatz von Platin und Rhodium durch die Verwendung von höheren Anteilen von Palladium reduziert werden kann, ohne Einbußen bei der katalytischen Effizienz hinnehmen zu müssen.

Außerdem lag der Erfindung die Aufgabe zugrunde, ein Verfahren für den Einsatz eines solchen Katalysatorsystems anzugeben.

Die Aufgabe wird gelöst durch ein Katalysatorsystem für einen Strömungsreaktor, umfassend mindestens drei in Strömungsrichtung hintereinander angeordnete Katalysatornetz-Gruppen, wobei jede Katalysatornetz-Gruppe aus mindestens einem Katalysatornetz aus jeweils mindestens einem Edelmetalldraht gebildet wird und
- die erste Katalysatornetz-Gruppe mindestens ein Katalysatornetz aus mindestens einem ersten Edelmetalldraht aus einer Platinlegierung aufweist, wobei die Platinlegierung des ersten Edelmetalldrahts neben Verunreinigungen aus 80 - 98 Gew.-% Platin, 2 - 20 Gew.- % Rhodium und 0 - 15 Gew.-% Palladium besteht,
- die zweite Katalysatornetz-Gruppe mindestens ein Katalysatornetz aus mindestens einem zweiten Edelmetalldraht aus einer Platinlegierung aufweist, wobei die Platinlegierung des zweiten Edelmetalldrahts neben Verunreinigungen aus 75 - 98 Gew.-% Platin, 1 - 16 Gew.-% Rhodium und 1 - 20 Gew.-% Palladium besteht und
- die dritte Katalysatornetz-Gruppe mindestens ein Katalysatornetz aus mindestens einem dritten Edelmetalldraht aus einer Palladiumlegierung aufweist, wobei die Palladiumlegierung des dritten Edelmetalldrahts neben Verunreinigungen aus 70 - 97 Gew.-% Palladium, 0 - 10 % Gew.-% Rhodium und 3 - 30 Gew.-% mindestens eines weiteren Metalls besteht, wobei das mindestens eine weitere Metall ausgewählt ist aus der Gruppe bestehend aus Nickel, Wolfram, Platin und Gold
dadurch gekennzeichnet, dass der Rhodium-Gehalt der Edelmetalldrähte der Katalysatornetz-Gruppen in Strömungsrichtung abnimmt oder gleichbleibt und dass der Palladium-Gehalt der Edelmetalldrähte der Katalysatornetz-Gruppen in Strömungsrichtung zunimmt.

Im Rahmen der Erfindung wurde als überraschend erkannt, dass die Positionierung von Katalysatornetzen mit unterschiedlichen Zusammensetzungen im in Strömungsrichtung gesehen hinteren Bereich des Katalysatorsystems einen signifikanten Einfluss auf die Effizienz des Systems hat. Durch den Einsatz einer ternären Platinlegierung für die zweite und einer Palladiumlegierung für die dritte Katalysatornetzgruppe kann der Platin- und Rhodium-Gehalt des Katalysatorsystems bei einer hohen Effizienz insgesamt relativ niedrig gehalten werden. Vor allem im Hinblick auf perspektivisch niedrigere Palladium-Preise bieten solche Systeme wirtschaftliche Vorteile.

Die vorliegende Erfindung betrifft ein Katalysatorsystem für einen Strömungsreaktor. In Strömungsreaktoren werden typischerweise Katalysatoren in Form von gasdurchlässigen Flächengebilden in die Reaktionszone in einer Ebene senkrecht zur Strömungsrichtung des Frischgases eingebaut. Solche gasdurchlässigen Flächengebilden werden meist in Form von Katalysatornetzen eingesetzt. Unter einem Katalysatorsystem wird ein Ensemble von solchen Katalysatornetzen verstanden.

Das Katalysatorsystem gemäß der vorliegenden Erfindung umfasst mindestens drei in Strömungsrichtung hintereinander angeordnete Katalysatornetz-Gruppen. Jede Katalysatornetz-Gruppe wird aus mindestens einem Katalysatornetz aus jeweils mindestens einem Edelmetalldraht gebildet. Unter einer Katalysatornetzgruppe wird ein Ensemble aus mindestens einem Katalysatornetz verstanden, bei dem sich die Zusammensetzung der Edelmetalldrähte nicht unterscheidet. Typischerweise umfasst eine Katalysatornetzgruppe mehr als ein Katalysatornetz. Ein erfindungsgemäßes Katalysatorsystem umfasst also mindestens drei Katalysatornetze aus Edelmetalldrähten mit drei unterschiedlichen Zusammensetzungen.

Die reagierenden Gase passieren in Strömungsrichtung zunächst die erste, im Anschluss die zweite und abschließend die dritte Katalysatornetzgruppe.

Unter einem Katalysatornetz wird ein ein- oder mehrlagiges gasdurchlässiges Flächengebilde verstanden. Die Flächenbildung der Katalysatornetze kann durch maschenförmiges Verschlingen eines oder mehrerer Edelmetalldrähte erreicht werden. Katalysatornetze können beispielswiese durch Weben, Wirken oder Stricken eines Edelmetalldrahts oder mehrerer Edelmetalldrähte hergestellt werden. Die Struktur der Katalysatornetze kann dadurch gezielt durch die Verwendung unterschiedlicher Web-, Wirk- oder Strickmuster und/oder unterschiedliche Maschenweiten eingestellt werden.

Das Katalysatornetz oder die Katalysatornetze der ersten Katalysatornetzgruppe, das Katalysatornetz oder die Katalysatornetze der zweiten Katalysatornetzgruppe und das Katalysatornetz oder die Katalysatornetze der dritten Katalysatornetzgruppe können unabhängig voneinander gewirkt, gewebt und/oder gestrickt sein. Es können also gewirkte, gewebte und gestrickte Katalysatornetze beliebig miteinander kombiniert werden. Beispielsweise kann das Katalysatornetz oder die Katalysatornetze der ersten Katalysatornetzgruppe gewirkt sein und das Katalysatornetz oder die Katalysatornetze der zweiten und der dritten Katalysatornetzgruppe gestrickt. Ebenso kann das Katalysatornetz oder die Katalysatornetze der ersten Katalysatornetzgruppe gestrickt sein, das Katalysatornetz oder die Katalysatornetze der zweiten gestrickt und das Katalysatornetz oder die Katalysatornetze der dritten Katalysatornetzgruppe gewebt.

Das Katalysatornetz oder die Katalysatornetze der ersten Katalysatornetzgruppe weisen ein erstes Web-, Wirk- oder Strickmuster und eine erste Maschenweite auf. Das Katalysatornetz oder die Katalysatornetze der zweiten Katalysatornetzgruppe weisen ein zweites Web-, Wirk- oder Strickmuster und eine zweite Maschenweite auf und Katalysatornetz oder die Katalysatornetze der dritten Katalysatornetzgruppe weisen ein drittes Web-, Wirk- oder Strickmuster und eine dritte Maschenweite auf.

Es hat sich als vorteilhaft erwiesen, wenn mindestens zwei der ersten, zweiten und dritten Web- , Wirk- oder Strickmuster gleich sind, besonders vorteilhaft sind sowohl das erste, zweite und dritte Web-, Wirk- oder Strickmuster gleich.

Weiterhin kann es vorteilhaft sein, wenn mindestens zwei der ersten, zweiten und dritten Maschenweiten gleich sind, besonders vorteilhaft sind sowohl die erste, zweite und dritte Maschenweite gleich.

Das Flächengewicht der Katalysatornetze ist nicht weiter beschränkt. Das Flächengewicht der Katalysatornetze kann im Bereich von 100 bis 950 g/m² liegen, insbesondere im Bereich von 150 bis 800 g/m². Die Flächengewichte der Katalysatornetze innerhalb einer der mindestens drei Katalysatornetzgruppen können gleich oder unterschiedlich sein. Es hat sich als vorteilhaft erwiesen, wenn die Katalysatornetze einer Katalysatornetz-Gruppe über das gleiche Flächengewicht verfügen.

Die Flächengewichte der Katalysatornetze der mindestens drei Katalysatornetzgruppen können in Strömungsrichtung gleichbleiben, abnehmen oder zunehmen.

In bevorzugten Ausführungsformen kann mindestens eins der Katalysatornetze eine dreidimensionale Struktur aufweisen. Im Rahmen dieser Anmeldung werden Netze als flache, zweidimensionale Gegenstände verstanden. Unter einer dreidimensionalen Struktur ist zu verstehen, dass das Katalysatornetz neben seiner planaren Ausdehnung auch eine Erstreckung in die dritte Raumdimension aufweist. Katalysatornetze mit dreidimensionaler Struktur weisen eine größere Oberfläche auf, was sich vorteilhaft auf die katalytische Effektivität auswirken und den Druckabfall im Strömungsreaktor verringern kann. Eine dreidimensionale Struktur kann durch die Verwendung mindestens eines Edelmetalldrahtes mit zwei- oder dreidimensionaler Struktur oder durch die Strukturierung des Katalysatornetzes erhalten werden. Dreidimensionale Strukturen des Katalysatornetzes können beispielsweise wellenförmig oder beulenförmig sein. Zur Erzeugung solcher Strukturen kann ein zunächst planares Katalysatornetz einem Verfahrensschritt unterzogen werden, bei dem eine dreidimensionale Struktur eingeprägt wird oder durch Faltung erzeugt wird.

Dreidimensionale Strukturen können erhalten werden, indem ein planares Katalysatornetz auf eine rigide, durchlässige, aber nicht planare Oberfläche aufgelegt wird, zum Beispiel ein vorgeformtes Metallnetz. Die Struktur einer solchen strukturierten, durchlässigen Oberfläche, die nicht katalytisch wirksam sein muss, wird dann auf das Katalysatornetz übertragen. Katalysatornetze mit solchen Strukturen werden auch als korrugiert bezeichnet.

Es hat sich als vorteilhaft erwiesen, wenn mindestens ein Katalysatornetz des erfindungsgemäßen Katalysatorsystems eine dreidimensionale Struktur aufweist, insbesondere wenn es sich bei dem Katalysatornetz um ein korrugiertes Katalysatornetz handelt. Es kann vorteilhaft sein, wenn mindestens ein Katalysatornetz jeder Katalysatornetzgruppe eine dreidimensionale Struktur aufweist.

Die Anzahl der verwendeten Katalysatornetze hängt von den Bedingungen ab, bei denen der Strömungsreaktor betrieben wird. Maßgeblich ist unter anderem der Durchsatz an Frischgas, der unter anderem vom Druck abhängt. Beispielsweise können in einem Strömungsreaktor, der bei niedrigem Druck, z. B. bis etwa 5 bar abs., betrieben wird, typischerweise weniger als 15, oft zwischen 5 und 10 Katalysatornetze verwendet werden, während bei höherem Druck, z. B. bis 15 bar, eine größere Anzahl von Katalysatornetzen, typischerweise mehr als 20, oft zwischen 30 und 50, verwendet werden kann.

Die Katalysatornetze werden aus jeweils mindestens einem Edelmetalldraht gebildet. Das Edelmetall ist vorzugsweise ausgewählt aus der Gruppe die aus den Platinmetallen, Gold und Silber besteht. Unter Platinmetallen sind die Metalle der sogenannten Platingruppe, also Platin (Pt), Palladium (Pd), Iridium (Ir), Rhodium (Rh), Osmium (Os) und Ruthenium (Ru), zu verstehen. Unter einem Edelmetalldraht wird ein Draht verstanden, der aus Edelmetall oder einer Edelmetalllegierung besteht.

Vorzugsweise werden Edelmetalldrähte eingesetzt, die einen Durchmesser 40 - 250 µm aufweisen, bevorzugt 50 - 200 µm, besonders bevorzugt 60 - 150 µm.

Die Edelmetalldrähte können als Runddraht, das heißt mit einem runden Querschnitt, ausgebildet sein. In einer anderen Ausführung kann mindestens einer der Edelmetalldrähte als abgeflachter Runddraht oder als Draht mit einem anderen Querschnitt ausgeführt werden.

Die Edelmetalldrähte können mehrere Drähte, in diesem Fall auch als Filamente bezeichnet, umfassen. Die Filamente können alle aus dem gleichen Material bestehen, d.h. alle edelmetallhaltig sein, oder aus unterschiedlichen Materialien bestehen, die wiederum nicht alle edelmetallhaltig sein müssen.

Die Filamente können miteinander verdrillt sein, in diesen Fällen weisen die Edelmetalldrähte eine seilartige Struktur auf.

Die Edelmetalldrähte können einen oder mehrere helixförmig ausgebildete Längenabschnitte umfassen oder über als über die gesamte Länge als helixförmig gebogener Draht ausgebildet sein. Falls ein Edelmetalldraht einen helixförmig ausgebildeten Längenabschnitt aufweist, ist beispielsweise über die Drahtdicke oder über die Anzahl der Windungen des helixförmigen Längenabschnittes sowohl die aktive Katalysatoroberfläche eines Katalysatornetzes als auch die Masse des Katalysatornetzes bezogen auf eine Oberflächeneinheit einstellbar. Bei Verwendung solcher Edelmetalldrähte kann das daraus gefertigte Katalysatornetz eine dreidimensionale Struktur aufweisen.

In vielen Fällen kann es vorteilhaft sein, wenn ein Katalysatornetz aus zwei oder mehr Edelmetalldrähten gebildet wird. In diesen Fällen können die Edelmetalldrähte aus dem gleichen Material oder aus unterschiedlichen Materialien bestehen. Die mehreren Edelmetalldrähte können den gleichen oder unterschiedliche Durchmesser aufweisen.

Die erste Katalysatornetz-Gruppe des erfindungsgemäßen Katalysatorsystems umfasst mindestens ein Katalysatornetz aus mindestens einem ersten Edelmetalldraht. Der erste Edelmetalldraht weist eine Platinlegierung auf, die neben Verunreinigungen aus 80 - 98 Gew.-% Platin, 2 - 20 Gew.-% Rhodium und 0 - 15 Gew.-% Palladium besteht.

Unter einer Platinlegierung wird eine Legierung verstanden, die zu mehr als 50 Gew.-% aus Platin besteht. Dass die Legierung aus 80 - 98 Gew.-% Platin besteht bedeutet, dass der Gewichtsanteil des Platins 80 - 98 Gew.-% des Gewichts der gesamten Legierung ausmacht. Bevorzugt enthält die Platinlegierung des ersten Edelmetalldrahts 85 - 97 Gew.-% Platin, insbesondere 90 - 95 Gew.-%.

Die hierin beschriebenen Edelmetalllegierungen können Verunreinigungen enthalten. Unter einer Verunreinigung ist vorliegend eine beabsichtige oder durch die Herstellung der Legierung oder der Legierungen bedingte und unvermeidbare Verunreinigung zu verstehen. Sofern nicht anders angegeben, beträgt der Anteil der Verunreinigungen in der Summe maximal 1 Gew.-% bei allen beschriebenen Edelmetalllegierungen bezogen auf das Gesamtgewicht der jeweiligen Edelmetalllegierung, bevorzugt maximal 0,5 Gew.-%. Die Edelmetalllegierungen der vorliegenden Anmeldung umfassen insbesondere die Platinlegierungen des ersten und zweiten Edelmetalldrahts und die Palladiumlegierung des dritten Edelmetalldrahts.

In bevorzugten Ausführungsformen enthält die Platinlegierung des ersten Edelmetalldrahts 3-18 Gew.-% Rhodium, insbesondere 5 - 15 Gew.-%.

Bevorzugt enthält die Platinlegierung des ersten Edelmetalldrahts nicht mehr als 15 Gew.-% Palladium, insbesondere nicht mehr als 10 Gew.-%, besonders bevorzugt nicht mehr als 5 Gew.-%.

Der erste Edelmetalldraht kann eine ternäre Platinlegierung umfassen, bestehend aus Platin, Rhodium und Palladium. Die ternäre Platinlegierung kann außerdem wie oben beschrieben Verunreinigungen enthalten. In solchen Fällen handelt es sich bei der Platinlegierung des ersten Edelmetalldrahtes beispielsweise um PtRh5Pd5 oder PtRh5Pd15. PtRh(X)Pd(Y) bedeutet hierbei, dass die Legierung X Gewichts-% Rhodium, und Y Gewichts-% Palladium enthält und bis auf Verunreinigungen zu (100 - (X + Y)) Gewichts-% aus Platin besteht.

Besonders bevorzugt umfasst der erste Edelmetalldraht eine binäre Platinlegierung, bestehend aus Platin und Rhodium. Die binäre Platinlegierung kann außerdem wie oben beschrieben Verunreinigungen enthalten. In solchen Fällen handelt es sich bei der Platinlegierung des ersten Edelmetalldrahtes beispielsweise um PtRh3, PtRh5, PtRh8, PtRh10 oder PtRh15. PtRh(X) bedeutet hierbei, dass die Legierung X Gewichts-% Rhodium enthält und bis auf Verunreinigungen zu (100 - X) Gewichts-% aus Platin besteht.

In bevorzugten Ausführungsformen umfasst die erste Katalysatornetzgruppe 1 bis 10 Katalysatornetze, bevorzugt 3 bis 8 Katalysatornetze. Insbesondere kann die erste Katalysatornetzgruppe 1, 2, 3, 4, 5, 6, 7, 8, 9 oder 10 Katalysatornetze umfassen.

Es hat sich überraschend gezeigt, dass es für eine ausreichende katalytischen Effizienz genügt, wenn die erste Katalysatornetzgruppe nur ein Katalysatornetz umfasst. Dies stellt eine besonders einfache und daher bevorzugte Ausführungsform des Katalysatorsystems dar.

Die zweite Katalysatornetz-Gruppe des erfindungsgemäßen Katalysatorsystems umfasst mindestens ein Katalysatornetz aus mindestens einem zweiten Edelmetalldraht aus einer Platinlegierung. Die Platinlegierung des zweiten Edelmetalldrahts besteht neben Verunreinigungen aus 75 - 98 Gew.-% Platin, 1 - 16 Gew.-% Rhodium und 1 - 20 Gew.-% Palladium.

Bevorzugt enthält die Platinlegierung des zweiten Edelmetalldrahts 80 - 95 Gew.-% Platin, insbesondere 85 - 90 Gew.-%.

In bevorzugten Ausführungsformen enthält die Platinlegierung des zweiten Edelmetalldrahts 2 - 15 Gew.-% Rhodium, insbesondere 5 - 12 Gew.-%.

Bevorzugt enthält die Platinlegierung des zweiten Edelmetalldrahts mehr als 1 Gew.-% Palladium, insbesondere mehr als 5 Gew.-%, besonders bevorzugt mehr als 10 Gew.-%.

Die Platinlegierung des zweiten Edelmetalldrahts ist eine ternäre Platinlegierung und kann neben Platin, Rhodium und Palladium Verunreinigungen enthalten. Der Anteil der Verunreinigungen beträgt in der Summe maximal 1 Gew.-% der Platinlegierung, bevorzugt maximal 0,5 Gew.-%.

Die Platinlegierung des zweiten Edelmetalldrahtes kann beispielsweise PtRh5Pd5, PtRh1,5Pd13, PtRh2,5Pd17, PtRh4Pd14 oder PtRh3,5Pd16 sein. PtRh(X)Pd(Y) bedeutet hierbei, dass die Legierung X Gewichts-% Rhodium und Y Gewichts-% Palladium enthält und bis auf Verunreinigungen zu (100 - (X + Y)) Gewichts-% aus Platin besteht.

In bevorzugten Ausführungsformen umfasst die zweite Katalysatornetzgruppe 1 bis 10 Katalysatornetze, bevorzugt 3 bis 8. Insbesondere kann die zweite Katalysatornetzgruppe 1, 2, 3, 4, 5, 6, 7, 8, 9 oder 10 Katalysatornetze umfassen. Bevorzugt umfasst die zweite Katalysatornetzgruppe mehr Katalysatornetze als die erste Katalysatornetzgruppe.

Die dritte Katalysatornetz-Gruppe des erfindungsgemäßen Katalysatorsystems umfasst mindestens ein Katalysatornetz aus mindestens einem dritten Edelmetalldraht aus einer Palladiumlegierung.

Die Palladiumlegierung des dritten Edelmetalldrahts besteht neben Verunreinigungen aus 70 - 97 Gew.-% Palladium, 0 - 10% Gew.-% Rhodium und 3 - 30 Gew.-% mindestens eines weiteren Metalls, wobei das mindestens eine weitere Metall ausgewählt ist aus der Gruppe bestehend aus Nickel, Wolfram, Platin und Gold.

Unter einer Palladiumlegierung wird eine Legierung verstanden, die zu mehr als 50 Gew.-% aus Palladium besteht. Bevorzugt weist die Palladiumlegierung des dritten Edelmetalldrahtes einen Palladium-Gehalt im Bereich von 75 - 96 Gew.-% auf, bevorzugt von 80 - 95 Gew.-%.

Bevorzugt enthält die Palladiumlegierung des dritten Edelmetalldrahtes das mindestens eine weitere Metall im Bereich von 4 - 25 Gew.-%, besonders bevorzugt im Bereich von 5-20 Gew.-%.

Die Palladiumlegierung des dritten Edelmetalldrahtes kann beliebige Kombinationen aus der Gruppe bestehend aus Nickel, Wolfram, Platin und Gold enthalten.

Die Palladiumlegierung des dritten Edelmetalldrahtes kann neben Palladium, Nickel, Wolfram, Platin oder Gold und optional Rhodium Verunreinigungen enthalten. Der dritte Edelmetalldraht kann eine ternäre Palladiumlegierung, bestehend neben Verunreinigungen aus Palladium, Platin und Rhodium oder eine binäre Palladiumlegierung die neben Verunreinigungen Palladium und Nickel, Wolfram, Platin oder Gold enthält, umfassen. Der Anteil der Verunreinigungen beträgt in der Summe maximal 1 Gew.-% der Palladiumlegierung des dritten Edelmetalldrahtes, bevorzugt maximal 0,5 Gew.-%.

In bevorzugten Ausführungsformen weist die Palladiumlegierung des dritten Edelmetalldrahtes einen Rhodium-Gehalt von 1 - 10 Gew.-% auf, insbesondere im Bereich von 3 - 8 Gew.-%. Hinsichtlich einer hohen katalytischen Effizienz bei gleichzeitig geringen oder keinen negativen Auswirkungen auf Gebrauchsdauer kann es vorteilhaft sein, dass die Palladiumlegierung des dritten Edelmetalldrahts mindestens 1 Gew.-% Rhodium enthält. Besonders bevorzugt umfasst der dritten Edelmetalldraht in solchen Fällen einen Platin-Gehalt von mindestens 1,5 Gew.-%.

Bei der Palladiumlegierung des dritten Edelmetalldrahtes kann es sich beispielsweise um PdPt10Rh5, PdPt5Rh5, PdPt15Rh3 oder PdPt20Rh1 handeln. PdPt(Z)Rh(X) bedeutet hierin, dass die Legierung Z Gewichts-% Platin und X Gewichts-% Rhodium enthält und bis auf Verunreinigungen zu (100 - (Z + X)) Gewichts-% aus Palladium besteht.

Erfindungsgemäß nimmt der Rhodium-Gehalt der Edelmetalldrähte der Katalysatornetz-Gruppen in Strömungsrichtung ab oder bleibt gleich. Katalysatorsysteme mit einem solchen Rhodiumgradienten haben sich überraschend als effizienter herausgestellt als Systeme, bei denen ein oder mehrere Katalysatornetze umfassend einen Edelmetalldraht aus einer Legierung mit höherem Rhodiumgehalt im hinteren bzw. hintersten Bereich des Katalysatorsystems angeordnet ist.

In bevorzugten Ausführungsformen liegt der Rhodium-Gehalt des dritten Edelmetalldrahts um mindestens 2 Gewichts-Prozentpunkte unterhalb des Rhodium-Gehalts des zweiten Edelmetalldrahtes, besonders bevorzugt um mindestens 3 Gewichts-Prozentpunkte.

Es kann bevorzugt sein, dass der dritte Edelmetalldraht kein Rhodium enthält. In diesen Fällen ist die Palladiumlegierung des dritten Edelmetalldrahtes bevorzugt eine binäre Palladiumlegierung, d.h. sie besteht neben Palladium und Verunreinigungen aus nur einer weiteren Komponente. Bevorzugt handelt es sich bei der weiteren Komponente um Platin oder Nickel.

Erfindungsgemäß nimmt der Palladium-Gehalt der Edelmetalldrähte der Katalysatornetz-Gruppen in Strömungsrichtung zu. Überraschend hat sich gezeigt, dass ein Katalysatorsystem mit einem zunehmenden Palladiumgradienten in der erfindungsgemäßen Konfiguration trotz der damit einhergehenden Reduzierung von Platin und Rhodium eine hohe katalytische Effizienz aufweist.

Es kann vorteilhaft sein, wenn der dritte Edelmetalldraht Platin-frei ist. In solchen Ausführungsformen kann der Platin-Anteil im Katalysatorsystem weiter reduziert werden. Besonders bevorzugt umfasst der dritte Edelmetalldraht in solchen Fällen eine binäre Palladiumlegierung, bestehend aus Palladium, Verunreinigungen und Nickel, Wolfram oder Gold.

Beispiele für bevorzugte binäre Palladiumlegierung des dritten Edelmetalldrahtes umfassen PdNi5, PdW5, PdPt5, PdAu5, PdNi3, PdW3 und PdAu3. PdPt(Z) bedeutet, dass die Legierung Z Gewichts-% Platin enthält und bis auf Verunreinigungen zu (100 - Z) Gewichts-% aus Palladium besteht.

In bevorzugten Ausführungsformen umfasst die dritte Katalysatornetzgruppe 1 bis 10 Katalysatornetze, bevorzugt 2 bis 8. Insbesondere kann die dritte Katalysatornetzgruppe 1, 2, 3, 4, 5, 6, 7, 8, 9 oder 10 Katalysatornetze umfassen. Bevorzugt umfasst die dritte Katalysatornetzgruppe mehr Katalysatornetze als die erste oder zweite Katalysatornetzgruppe. In der Regel entfällt der größte Anteil am Gesamtvolumen des Katalysatorsystems von beispielsweise mindestens 70 % auf die Katalysatornetze der zweiten und dritten Katalysatorgruppen, und es genügt, wenn nur ein kleiner Volumenanteil von beispielsweise weniger als 30 %, vorzugsweise weniger als 25 %, und besonders bevorzugt weniger als 20 % auf Katalysatornetze der ersten Katalysatornetzgruppe aus dem rhodiumreichsten Edelmetalldraht entfällt. Das Volumen des Katalysatorsystems bzw. der Katalysatornetzgruppen wird vor allem durch die Anzahl der jeweils eingesetzten Katalysatornetze bestimmt.

In bevorzugten Ausführungsformen des erfindungsgemäßen Katalysatorsystems besteht
- der erste Edelmetalldraht aus einer binären Platinlegierung, bestehend aus Platin und Rhodium,
- der zweite Edelmetalldraht aus einer ternären Platinlegierung, bestehend aus Platin, Rhodium und Palladium und
- der dritte Edelmetalldraht aus einer binären Palladiumlegierung, bestehend aus Palladium und Nickel, Wolfram, Platin oder Gold.

Insbesondere kann der erste Edelmetalldraht aus einer PtRh(2-10)-Legierung bestehen, der zweite Edelmetalldraht aus einer PtRh(1-16)Pd(1-20)-Legierung und der dritte Edelmetalldraht aus einer PdNi(3-30)-Legierung, einer PdW(3-30)-Legierung, einer PdPt(3-30)-Legierung oder einer PdAu(3-30)-Legierung. PtRh(a-b) bedeutet hierbei beispielsweise, dass die Legierung Rhodium mit einem Gewichtsanteil im Bereich von a bis b Gewichts-% enthält und der restliche Anteil der (100 - (a bis b)) Gewichts-% bis auf Verunreinigungen aus Platin besteht.

Bevorzugt kann auch sein, dass
- der erste Edelmetalldraht aus einer binären Platinlegierung, bestehend aus Platin und Rhodium,
- der zweite Edelmetalldraht aus einer ternären Platinlegierung, bestehend aus Platin, Rhodium und Palladium und
- der dritte Edelmetalldraht aus einer ternären Palladiumlegierung, bestehend aus Palladium, Platin und Rhodium besteht.

Insbesondere kann der erste Edelmetalldraht aus einer PtRh(2-10)-Legierung bestehen, der zweite Edelmetalldraht aus einer PtRh(1-16)Pd(1-20)-Legierung und der dritte Edelmetalldraht aus einer PdPt(3-30)Rh(1-5)-Legierung.

In weiteren bevorzugten Ausführungsformen des erfindungsgemäßen Katalysatorsystems besteht
- der erste Edelmetalldraht aus einer ternären Platinlegierung, bestehend aus Platin, Palladium und Rhodium,
- der zweite Edelmetalldraht aus einer ternären Platinlegierung, bestehend aus Platin, Rhodium und Palladium und
- der dritte Edelmetalldraht aus einer binären Palladiumlegierung, bestehend aus Palladium und Nickel, Wolfram, Platin und Gold.

Insbesondere kann der erste Edelmetalldraht aus einer PtPd(1-15)Rh(2-20)-Legierung bestehen, der zweite Edelmetalldraht aus einer PtRh(1-16)Pd(1-20)-Legierung und der dritte Edelmetalldraht aus einer PdNi(3-30)-Legierung, einer PdW(3-30)-Legierung, einer PdPt(3-30)-Legierung oder einer PdAu(3-30)-Legierung.

In weiteren bevorzugten Ausführungsformen des erfindungsgemäßen Katalysatorsystems besteht
- der erste Edelmetalldraht aus einer ternären Platinlegierung, bestehend aus Platin, Palladium und Rhodium,
- der zweite Edelmetalldraht aus einer ternären Platinlegierung, bestehend aus Platin, Rhodium und Palladium und
- der dritte Edelmetalldraht aus einer ternären Palladiumlegierung, bestehend aus Palladium, Platin und Rhodium besteht.

Insbesondere kann der erste Edelmetalldraht aus einer PtPd(1-15)Rh(2-20)-Legierung bestehen, der zweite Edelmetalldraht aus einer PtRh(1-16)Pd(1-20)-Legierung und der dritte Edelmetalldraht aus einer PdPt(3-30)Rh(1-5)-Legierung.

Das Katalysatorsystem kann auch weitere Komponenten umfassen.

Das Katalysatorsystem kann beispielsweise vor der ersten Katalysatornetzgruppe eine Zündlage umfassen. Eine Zündlage umfasst einen Edelmetalldraht, der nur Platin und Verunreinigungen enthält.

Es kann auch vorteilhaft sein, dass mindestens das in Strömungsrichtung gesehen vorderste Katalysatornetz einen Edelmetalldraht aus Platin enthält, der neben Verunreinigungen keine weiteren Komponenten enthält. Dieses vordere Katalysatornetz kann ein Katalysatornetz der ersten Katalysatornetzgruppe sein.

Das erfindungsgemäße Katalysatorsystem kann auch mindestens eine weitere Katalysatornetzgruppe aus mindestens einem Katalysatornetz aus mindestens einem weiteren Edelmetalldraht umfassen.

Der mindestens eine weitere Edelmetalldraht kann die gleiche Zusammensetzung aufweisen wie der erste, zweite oder dritte Edelmetalldraht, die Zusammensetzung kann aber auch unterschiedlich sein. Auch in solchen Fällen ist es vorteilhaft, dass der Rhodium-Gehalt der Edelmetalldrähte in Strömungsrichtung abnimmt oder gleichbleibt. Der Palladium-Gehalt der Edelmetalldrähte kann in diesem Fall in Strömungsrichtung gleichbleiben oder zunehmen.

Das erfindungsgemäße Katalysatorsystems kann beispielsweise mindestens vier Katalysatornetzgruppen enthalten, umfassend jeweils mindestens ein Katalysatornetz aus mindestens einem Edelmetalldraht. Die mindestens eine weitere Katalysatornetzgruppe kann dabei vor der ersten Katalysatornetzgruppe oder hinter der dritten Katalysatornetzgruppe angeordnet sein. Der Rhodium-Gehalt der Edelmetalldrähte nimmt in Strömungsrichtung ab oder bleibt gleich.

Es hat sich als vorteilhaft erwiesen, dass die mindestens eine weitere Katalysatornetzgruppe hinter der dritten Katalysatornetzgruppe angeordnet ist. In solchen Fällen ist es besonders vorteilhaft, wenn der mindestens eine weitere Edelmetalldraht eine Palladiumlegierung aufweist.

Bevorzugt besteht die Palladiumlegierung des mindestens eine weitere Edelmetalldrahts neben Verunreinigungen aus 72 - 97 Gew.-% Palladium, 0 - 10 % Gew.-% Rhodium und aus 3-28 Gew.-% mindestens einen weiteren Metalls, wobei das mindestens eine weitere Metall ausgewählt ist aus der Gruppe bestehend aus Nickel, Wolfram, Platin und Gold.

Bevorzugt weist die Palladiumlegierung des mindestens eine weitere Edelmetalldrahts einen Palladium-Gehalt im Bereich von 75 - 95 Gew.-% auf, besonders bevorzugt im Bereich von 78 - 90 Gew.-%.

Bevorzugt enthält die Palladiumlegierung des mindestens einen weiteren Edelmetalldrahts das mindestens eine weitere Metall im Bereich von 5 - 25 Gew.-% auf, besonders bevorzugt im Bereich von 10 - 22 Gew.-%.

Die Palladiumlegierung des mindestens einen weiteren Edelmetalldrahts kann beliebige Kombinationen aus der Gruppe bestehend aus Nickel, Wolfram, Platin und Gold enthalten.

Die Palladiumlegierung des mindestens einen weiteren Edelmetalldrahts kann neben Palladium, Nickel, Wolfram, Platin oder Gold und optional Rhodium Verunreinigungen enthalten. Der Anteil der Verunreinigungen beträgt in der Summe maximal 1 Gew.-% der Palladiumlegierung des mindestens eine weitere Edelmetalldrahts, bevorzugt maximal 0,5 Gew.-%.

In bevorzugten Ausführungsformen ist die Palladiumlegierung des mindestens einen weiteren Edelmetalldrahts eine binäre Legierung, die neben Palladium und Verunreinigungen Nickel, Wolfram, Platin oder Gold enthält.

In bevorzugten Ausführungsformen des erfindungsgemäßen Katalysatorsystems besteht
- der erste Edelmetalldraht aus einer binären Platinlegierung, bestehend aus Platin und Rhodium,
- der zweite Edelmetalldraht aus einer ternären Platinlegierung, bestehend aus Platin, Rhodium und Palladium,
- der dritte Edelmetalldraht aus einer binären Palladiumlegierung, bestehend aus Palladium und Nickel, Wolfram, Platin oder Gold und
- der mindestens eine weitere Edelmetalldraht eine binäre Palladiumlegierung aufweist, bestehend aus Palladium und Verunreinigungen Nickel, Wolfram, Platin oder Gold.

Insbesondere kann der erste Edelmetalldraht aus einer PtRh(2-10)-Legierung bestehen, der zweite Edelmetalldraht aus einer PtRh(1-16)Pd(1-20)-Legierung, der dritte Edelmetalldraht aus einer PdNi(3-30)-Legierung, einer PdW(3-30)-Legierung, einer PdPt(3-30)-Legierung oder einer PdAu(3-30)-Legierung und der mindestens eine weitere Edelmetalldraht aus einer PdNi(3-28)-Legierung, einer PdW(3-28)-Legierung, einer PdPt(3-28)-Legierung oder einer PdAu(3-28)-Legierung.

Bevorzugt kann auch sein, dass
- der erste Edelmetalldraht aus einer binären Platinlegierung, bestehend aus Platin und Rhodium,
- der zweite Edelmetalldraht aus einer ternären Platinlegierung, bestehend aus Platin, Rhodium und Palladium,
- der dritte Edelmetalldraht aus einer ternären Palladiumlegierung, bestehend aus Palladium, Platin und Rhodium besteht und
- der mindestens eine weitere Edelmetalldraht eine binäre Palladiumlegierung aufweist, bestehend aus Palladium und Verunreinigungen Nickel, Wolfram, Platin oder Gold.

Insbesondere kann der erste Edelmetalldraht aus einer PtRh(2-10)-Legierung bestehen, der zweite Edelmetalldraht aus einer PtRh(1-16)Pd(1-20)-Legierung, der dritte Edelmetalldraht aus einer PdPt(3-30)Rh(1-5)-Legierung und der mindestens eine weitere Edelmetalldraht aus einer PdNi(3-28)-Legierung, einer PdW(3-28)-Legierung, einer PdPt(3-28)-Legierung oder einer PdAu(3-28)-Legierung.

In weiteren bevorzugten Ausführungsformen des erfindungsgemäßen Katalysatorsystems besteht
- der erste Edelmetalldraht aus einer ternären Platinlegierung, bestehend aus Platin, Palladium und Rhodium,
- der zweite Edelmetalldraht aus einer ternären Platinlegierung, bestehend aus Platin, Rhodium und Palladium,
- der dritte Edelmetalldraht aus einer binären Palladiumlegierung, bestehend aus Palladium und Nickel, Wolfram, Platin und Gold und
- der mindestens eine weitere Edelmetalldraht eine binäre Palladiumlegierung aufweist, bestehend aus Palladium und Verunreinigungen Nickel, Wolfram, Platin oder Gold.

Insbesondere kann der erste Edelmetalldraht aus einer PtPd(1-15)Rh(2-20)-Legierung bestehen, der zweite Edelmetalldraht aus einer PtRh(1-16)Pd(1-20)-Legierung, der dritte Edelmetalldraht aus einer PdNi(3-30)-Legierung, einer PdW(3-30)-Legierung, einer PdPt(3-30)-Legierung oder einer PdAu(3-30)-Legierung und der mindestens eine weitere Edelmetalldraht aus einer PdNi(3-28)-Legierung, einer PdW(3-28)-Legierung, einer PdPt(3-28)-Legierung oder einer PdAu(3-28)-Legierung.

In weiteren bevorzugten Ausführungsformen des erfindungsgemäßen Katalysatorsystems besteht
- der erste Edelmetalldraht aus einer ternären Platinlegierung, bestehend aus Platin, Palladium und Rhodium,
- der zweite Edelmetalldraht aus einer ternären Platinlegierung, bestehend aus Platin, Rhodium und Palladium,
- der dritte Edelmetalldraht aus einer ternären Palladiumlegierung, bestehend aus Palladium, Platin und Rhodium besteht und
- der mindestens eine weitere Edelmetalldraht eine binäre Palladiumlegierung aufweist, bestehend aus Palladium und Verunreinigungen Nickel, Wolfram, Platin oder Gold.

Insbesondere kann der erste Edelmetalldraht aus einer PtPd(1-15)Rh(2-20)-Legierung bestehen, der zweite Edelmetalldraht aus einer PtRh(1-16)Pd(1-20)-Legierung, der dritte Edelmetalldraht aus einer PdPt(3-30)Rh(1-5)-Legierung und der mindestens eine weitere Edelmetalldraht aus einer PdNi(3-28)-Legierung, einer PdW(3-28)-Legierung, einer PdPt(3-28)-Legierung oder einer PdAu(3-28)-Legierung.

In bevorzugten Ausführungsform kann das erfindungsgemäße Katalysatorsystem mindestens ein Trennelement zwischen zwei der Katalysatornetz-Gruppen umfassen, beispielsweise in Form von mindestens einem Zwischennetz. Solche Zwischennetze können eingesetzt werden, um einer Kompression benachbarter Katalysatornetz-Gruppen unter Druckbelastung entgegenzuwirken. Das Zwischennetz oder die Zwischennetze verfügt vorzugsweise über eine im Vergleich zu den Katalysatornetzen der Katalysatornetz-Gruppen eingeschränkte Flexibilität.

Als Trennelemente eignen sich beispielsweise Elemente oder Netze aus einem hitzebeständigen Stahl, typischerweise einer FeCrAI-Legierung wie Megapyr oder Kanthal, Edelstahl oder aus hitzebeständigen Legierungen wie beispielsweise Nickel-Chrom-Legierungen. Das oder die Trennelemente können außerdem eine katalytisch aktive Beschichtung umfassend mindestens ein Edelmetall aufweisen.

Es hat sich als vorteilhaft erwiesen, wenn zwischen der ersten Katalysatornetzgruppe und der zweiten Katalysatornetzgruppe ein Trennelement angeordnet ist, insbesondere ein Zwischennetz. Als besonders vorteilhaft haben sich Zwischennetze aus Megapyr oder Kanthal herausgestellt.

Trennelemente in Form von Zwischennetzen können auch innerhalb der Katalysatornetzgruppen angeordnet sein.

Das erfindungsgemäße Katalysatorsystem ist zur Herstellung von Salpetersäure nach dem Ostwald-Verfahren geeignet. Dabei wird das Katalysatorsystem von einem Ammoniak-Sauerstoff-Gemisch durchströmt, mit anderen Worten handelt es sich dabei um eine katalytische Ammoniakverbrennung.

Das erfindungsgemäße Katalysatorsystem ist außerdem zur Herstellung von Blausäure nach dem Andrussow-Verfahren geeignet. Dabei wird das Katalysatorsystem von einem Ammoniak-Methan-Sauerstoff-Gemisch durchströmt.

Die vorliegende Erfindung betrifft außerdem ein Verfahren zur katalytischen Oxidation von Ammoniak, bei dem ein mindestens Ammoniak enthaltendes Frischgas durch das erfindungsgemäße Katalysatorsystem geleitet wird. Für bevorzugte Ausführungsformen des Katalysatorsystems sei auf die vorangegangenen Ausführungen verwiesen.

Bevorzugt liegt der Ammoniakgehalt des Frischgases zwischen 9,5 und 12 Vol.-%.

Der Druck des Frischgases beträgt bevorzugterweise zwischen 1 und 14 bar, insbesondere zwischen 3 und 10 bar. Die Katalysatornetztemperatur liegt bevorzugt im Bereich von 500 bis 1300 °C, bevorzugt im Bereich von 800 bis 1100 °C.

Bevorzugterweise wird das Frischgas mit einem Durchsatz im Bereich von 6 bis 60 tN/m²d durch ein Katalysatorsystem gemäß der vorliegenden Erfindung geleitet. Die Abkürzung "tN/m²d" steht dabei für "Tonnen Stickstoff (aus Ammoniak) pro Tag und normierter effektiver Querschnittsfläche des Katalysatorsystems von einem Quadratmeter.

Nachfolgend wird die Erfindung anhand einer Zeichnung und Ausführungsbeispielen sowie einem Versuch zur katalytischen Aktivität erläutert.

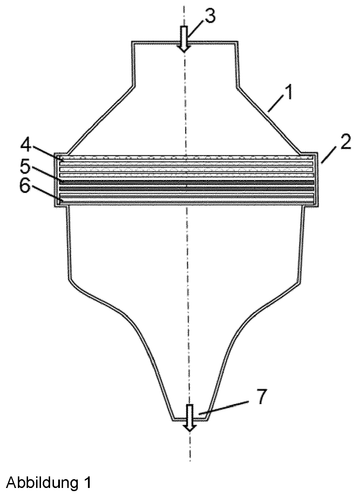

**Abbildung 1** zeigt schematisch einen senkrecht positionierten Strömungsreaktor 1 zur heterogen-katalytischen Verbrennung von Ammoniak. Das Katalysatorsystem 2 bildet die eigentliche Reaktionszone des Strömungsreaktors 1. Das Katalysatorsystem 2 umfasst mehrere, in Strömungsrichtung 3 des Frischgases hintereinander angeordnete Katalysatornetzgruppen (4, 5, 6).

Das Frischgas ist ein Ammoniak-Luftgemisch mit einem nominalen Ammoniakgehalt von 10,7 Vol.%. Es wird auf eine Vorheiztemperatur von 175 °C erwärmt und von oben in den Reaktor 1 unter einem erhöhten Druck von 5 bar eingeleitet. Beim Eintritt in das Katalysatorsystem 2 erfolgen eine Zündung des Gasgemischs und eine anschließende exotherme Verbrennungsreaktion. Dabei findet folgende Hauptreaktion statt:

4 NH₃ + 5 O₂ 4 NO + 6 H₂O

Dabei wird Ammoniak (NH₃) zu Stickstoffmonoxid (NO) und Wasser (H₂O) umgesetzt. Das gebildete Stickstoffmonoxid (NO) reagiert im abströmenden Reaktionsgasgemisch (symbolisiert durch den die Strömungsrichtung des abströmenden Reaktionsgasgemischs anzeigenden Richtungspfeil 7) mit überschüssigem Sauerstoff zu Stickstoffdioxid (NO₂), das mit Wasser in einer nachgeschalteten Absorptionsanlage zu Salpetersäure (HNO₃) umgesetzt wird.

Die Katalysatornetze sind jeweils textile Flächengebilde, die durch maschinelles Wirken eines Edelmetalldrahtes mit einem Durchmesser von typischerweise 76 µm aus der jeweiligen Edelmetall-Legierung hergestellt werden. In den **Tabellen 1** und **2** sind Ausführungsbeispiele (E1 - E11) für Katalysatorsysteme angegeben, die in einem Strömungsreaktor 1 eingesetzt werden können.

**Tabelle 1:**

| | E1 | E2 | E3 | E4 | E5 | E6 |
|---|---|---|---|---|---|---|
| G1 | PtRh5 | PtRh5 | PtRh5 | PtRh5 | PtRh5 | PtRh5 |
| G2 | PtRh5Pd5 | PtRh3,5Pd16 | PtRh2,5Pd17 | PtRh5Pd15 | PtRh4Pd10 | PtRh3Pd12 |
| G3 | PdNi5 | PdW5 | PdPt5 | PdPt5Rh5 | PdPt15 | PdAu5 |

**Tabelle 2:**

| | E7 | E8 | E9 | E10 | E11 |
|---|---|---|---|---|---|
| G1 | PtRh5 | PtRh5Pd5 | PtRh5Pd5 | PtPd15Rh5 | PtRh8 |
| G2 | PtRh3,5Pd16 | PtRh4Pd10 | PtRh3Pd12 | PtRh2,5Pd17 | PtRh5Pd5 |
| G3 | PdPt15Rh3 | PdPt20Rh1 | PdPt10Rh1 | PdPt20 | PdPt10Rh5 |

Die Katalysatorsysteme umfassten jeweils 3 Katalysatornetzgruppen mit insgesamt 30 Katalysatornetzen, die Reihenfolge der Benennung G1 bis G3 gibt die Anordnung in Strömungsrichtung des Frischgases wieder.

In einem Testreaktor gemäß Abbildung 1 wurden die Katalysatorsysteme E1 - E11 mit Katalysatorsystemen verglichen, in denen jeweils nur eine Platinlegierung eingesetzt wurde. Dafür wurde die Auswahl der Legierungen auf die der Katalysatornetzgruppen von G2 und G3 oder von G1 und G3 beschränkt. Um einen vergleichbaren Gehalt an katalytisch wirksamen Edelmetall im erfindungsgemäß ausgestatteten Reaktor und Vergleichsreaktor zu gewährleisten, wurde die Anzahl der Katalysatornetze entsprechend angepasst.

Die Testreaktoren wurden bei den folgenden, jeweils gleichen Testbedingungen betrieben.

| | |
|---|---|
| Druck: | 5 bar (absolut) |
| Durchsatz: | 12 Tonnen Stickstoff (aus Ammoniak) pro Tag und effektiver Querschnittsfläche der Katalysatorpackung in Quadratmeter (abgekürzt mit 12 tN/m²d) |
| NH₃-Anteil: | 10,7 Vol.-% im Frischgas |
| Vorheiztemp.: | 175°C (Temperatur des NH₃/Luft Gemisches), woraus sich eine Netztemperatur von 890°C ergibt. |

Im Abstand von etwa 12 h wurde über einen Zeitraum von 4 Tagen die Entwicklung der Katalysatoreffizienz des Katalysators (Ausbeute an NO in %) und die Menge des als unerwünschtes Nebenprodukt anfallenden Lachgases N₂O gemessen.

Die Messung der katalytischen Effizienz (das heißt, der Produktausbeute an NO) hat folgenden Ablauf:
1. Vorab wird sichergestellt, dass das Katalysatorsystem für den vollständigen Umsatz des eingesetzten Ammoniaks geeignet ist. Das bedeutet, dass NH₃ im Produktgas nicht mehr in nennenswerter Menge vorhanden ist, was mittels massenspektrometrischer Untersuchung des Produktgases überprüft wird.
2. Gleichzeitige Entnahme eine Probe von NH₃/Luft stromaufwärts zur Katalysatorpackung und einer Probe aus dem Produktgas stromabwärts in jeweils eigenständige evakuierte Kolben. Die Masse des Gases wird durch Wiegen bestimmt.
3. Das NH₃ Luft/Gemisch wird in destilliertem Wasser absorbiert und mittels 0.1 N Schwefelsäure und Methylrot nach Farbumschlag titriert.
4. Die nitrosen Produktgase werden in 3 %iger Natriumperoxid Lösung absorbiert und mittels 0.1 N Natriumhydroxid Lösung und Methylrot nach Farbumschlag titriert.
5. Die katalytische Effizienz Eta ergibt sich aus: Eta = 100 * Cₙ / Cₐ, wobei Cₐ die mittlere NH₃ Konzentration aus 7 Einzelmessungen im Frischgas in Gewichtsprozent und Cₙ die mittlere NOₓ Konzentration aus 7 Einzelmessungen ist, ausgedrückt als Gewichtsprozent des NH₃ welches zu NOₓ oxidiert worden ist.
6. Separat wird der Volumenanteil an N₂O im Produktgas mittels Gas-Chromatographie bestimmt.

In den erfindungsgemäß ausgestatteten Reaktoren konnte trotz einem um bis zu 17 % reduzierten Platingewicht und einem um bis zu 27 % reduzierten Rhodiumgewicht eine über den gesamten Testzeitraum vergleichbare Effizienz bei einem vergleichbarem Anteil an N₂O gegenüber Systemen, die nur aus den Legierungen der Katalysatornetzgruppen G1 und G3 bestanden, beobachtet werden. In diesem Technologiebereich stellt eine Einsparung von bis zu 17 % Platin und bis zu 27 % Rhodium eine signifikante und wirtschaftlich bedeutende Reduzierung des dieser Edelmetalle dar.

Reaktoren, die mit einem System ausgestattet waren, das nur aus den Legierungen der Katalysatornetzgruppen G2 und G3 bestanden, erzielten im Vergleich zu erfindungsgemäßen Katalysatorsystemen eine um ca. 1 % reduzierte Effizienz der Ammoniakoxidation und sind damit trotz erheblicher Einsparungen an Platin und Rhodium als wirtschaftlich unrentabel einzustufen.

## Patentansprüche

1. Katalysatorsystem für einen Strömungsreaktor, umfassend mindestens drei in Strömungsrichtung hintereinander angeordnete Katalysatornetz-Gruppen,
wobei jede Katalysatornetz-Gruppe aus mindestens einem Katalysatornetz aus jeweils mindestens einem Edelmetalldraht gebildet wird und
- die erste Katalysatornetz-Gruppe mindestens ein Katalysatornetz aus mindestens einem ersten Edelmetalldraht aus einer Platinlegierung aufweist, wobei die Platinlegierung des ersten Edelmetalldrahts neben Verunreinigungen aus 80 - 98 Gew.-% Platin, 2 - 20 Gew.-% Rhodium und 0-15 Gew.-% Palladium besteht,
- die zweite Katalysatornetz-Gruppe mindestens ein Katalysatornetz aus mindestens einem zweiten Edelmetalldraht aus einer Platinlegierung aufweist, wobei die Platinlegierung des zweiten Edelmetalldrahts neben Verunreinigungen aus 75 - 98 Gew.-% Platin, 1 - 16 Gew.-% Rhodium und 1 - 20 Gew.-% Palladium besteht und
- die dritte Katalysatornetz-Gruppe mindestens ein Katalysatornetz aus mindestens einem dritten Edelmetalldraht aus einer Palladiumlegierung aufweist, wobei die Palladiumlegierung des dritten Edelmetalldrahts neben Verunreinigungen aus 70 - 97 Gew.-% Palladium, 0 - 10 % Gew.-% Rhodium und 3 - 30 Gew.-% mindestens eines weiteren Metalls besteht, wobei das mindestens eine weitere Metall ausgewählt ist aus der Gruppe bestehend aus Nickel, Wolfram, Platin und Gold
**dadurch gekennzeichnet, dass**
- der Rhodium-Gehalt der Edelmetalldrähte der Katalysatornetz-Gruppen in Strömungsrichtung abnimmt oder gleichbleibt und
- der Palladium-Gehalt der Edelmetalldrähte der Katalysatornetz-Gruppen in Strömungsrichtung zunimmt.

2. Katalysatorsystem gemäß Anspruch 1, wobei die Katalysatornetze unabhängig voneinander gewebt, gewirkt oder gestrickt sind.

3. Katalysatorsystem gemäß Anspruch 1 oder 2, wobei mindestens eins der Katalysatornetze eine dreidimensionale Struktur aufweist.

4. Katalysatorsystem gemäß Anspruch 3, wobei mindestens eins der Katalysatornetze korrugiert ist.

5. Katalysatorsystem gemäß einem der vorangegangenen Ansprüche, wobei die Edelmetalldrähte einen Durchmesser von 40 - 250 µm aufweisen.

6. Katalysatorsystem gemäß einem der vorangegangenen Ansprüche, wobei der Anteil der Verunreinigungen in den Legierungen der Edelmetalldrähte jeweils maximal 1 Gew.-% beträgt.

7. Katalysatorsystem gemäß einem der vorangegangenen Ansprüche, wobei die Platinlegierung des ersten Edelmetalldrahts nicht mehr als 10 Gew.-% Palladium enthält.

8. Katalysatorsystem gemäß einem der vorangegangenen Ansprüche, wobei der Palladium-Gehalt des dritten Edelmetalldrahts um mindestens 2 Gewichts-Prozentpunkte oberhalb des Palladium-Gehalts des zweiten Edelmetalldrahtes liegt.

9. Katalysatorsystem gemäß einem der vorangegangenen Ansprüche, wobei der Rhodium-Gehalt des dritten Edelmetalldrahts um mindestens 2 Gewichts-Prozentpunkte unterhalb des Rhodium-Gehalts des zweiten Edelmetalldrahtes liegt.

10. Katalysatorsystem gemäß einem der vorangegangenen Ansprüche, wobei der dritte Edelmetalldraht eine ternäre Palladiumlegierung, die neben Verunreinigungen aus Palladium, Platin und Rhodium besteht oder eine binäre Palladiumlegierung, die neben Verunreinigungen aus Palladium und Nickel, Wolfram, Platin oder Gold besteht, umfasst.

11. Katalysatorsystem gemäß einem der Ansprüche 1 bis 9, wobei der dritte Edelmetalldraht Rhodium-frei ist.

12. Katalysatorsystem gemäß einem der vorangegangenen Ansprüche, wobei das Katalysatorsystem mindestens eine weitere Katalysatornetzgruppe aus mindestens einem Katalysatornetz aus mindestens einem weiteren Edelmetalldraht umfasst.

13. Katalysatorsystem gemäß einem der vorangegangenen Ansprüche, wobei das Katalysatorsystem mindestens ein Trennelement zwischen zwei der Katalysatornetzgruppen umfasst.

14. Verfahren zur katalytischen Oxidation von Ammoniak, bei dem ein mindestens Ammoniak enthaltendes Frischgas durch ein Katalysatorsystem gemäß einem der vorangegangenen Ansprüche geleitet wird.
